# EUROPEAN PATENT SPECIFICATION

(11) **EP 3 017 022 B1**
(45) Date of publication and mention of the grant of the patent: **07.03.2018**
(21) Application number: 14733660.6
(22) Date of filing: 30.06.2014
(51) Int. Cl.: C10G 9/36, C10G 51/00, C10G 69/06

(54) **METHOD FOR CRACKING A HYDROCARBON FEEDSTOCK IN A STEAM CRACKER UNIT**
VERFAHREN ZUR SPALTUNG EINES KOHLENWASSERSTOFFES IN EINEM STEAMCRACKER
PROCÉDÉ DE CRAQUAGE D'UNE CHARGE D'HYDROCARBURES DANS UNE UNITÉ DE VAPOCRAQUAGE

(30) Priority: 02.07.2013 EP 13174784
(43) Date of publication of application: 11.05.2016
(73) Proprietor: Saudi Basic Industries Corporation, Riyadh 11422 (SA); SABIC Global Technologies B.V., 4612 PX Bergen op Zoom (NL)
(72) Inventor: WARD, Andrew Mark, Wilton Centre TS10 4YA (GB); OPRINS, Arno Johannes Maria, NL-6160 GA Geleen (NL); HOUSMANS, Thomas Hubertus Maria, NL-6160 GA Geleen (NL); NARAYANASWAMY, Ravichander, Bangalore 562125 Karnataka (IN); RAJAGOPALAN, Vijayanand, Bangalore 562125 Karnataka (IN); POWALE, Lakshmikant Suryakant, Selkirk, New York 12158 (US)
(74) Representative: Algemeen Octrooi- en Merkenbureau B.V.
(86) International application number: PCT/EP2014/063852
(87) International publication number: WO 2015/000844

(56) References cited:
- EP-A1- 0 584 879
- FR-A1- 2 364 879
- GB-A- 1 250 615
- US-A- 3 842 138
- Agency For Toxic Substances And Disease Registry (atsdr): "Toxicological profile for jet fuels JP-5 and JP-8", U.S. Department of Health and Human Services, Public Health Service., 1 August 1998 (1998-08-01), pages 97-102, XP055074748, Atlanta, GA Retrieved from the Internet: URL:http://www.atsdr.cdc.gov/toxprofiles/t p121-c3.pdf [retrieved on 2013-08-09]

## Description

The present invention relates to a process for cracking a hydrocarbon feedstock in a steam cracker unit.

Conventionally, crude oil is processed, via distillation, into a number of cuts such as naphtha, gas oils and residua. Each of these cuts has a number of potential uses such as for producing transportation fuels such as gasoline, diesel and kerosene or as feeds to some petrochemicals and other processing units.

Light crude oil cuts such a naphtha's and some gas oils can be used for producing light olefins and single ring aromatic compounds via processes such as steam cracking in which the hydrocarbon feed stream is evaporated and diluted with steam then exposed to a very high temperature (800°C to 860°C) in short residence time (<1 second) furnace (reactor) tubes. In such a process the hydrocarbon molecules in the feed are transformed into (on average) shorter molecules and molecules with lower hydrogen to carbon ratios (such as olefins) when compared to the feed molecules. This process also generates hydrogen as a useful by-product and significant quantities of lower value co-products such as methane and C9+ Aromatics and condensed aromatic species (containing two or more aromatic rings which share edges).

Typically, the heavier (or higher boiling point), higher aromatic content streams, such as residua are further processed in a crude oil refinery to maximize the yields of lighter (distillable) products from the crude oil. This processing can be carried out by processes such as hydro-cracking (whereby the hydro-cracker feed is exposed to a suitable catalyst under conditions which result in some fraction of the feed molecules being broken into shorter hydrocarbon molecules with the simultaneous addition of hydrogen). Heavy refinery stream hydrocracking is typically carried out at high pressures and temperatures and thus has a high capital cost.

An aspect of such a combination of crude oil distillation and steam cracking of the lighter distillation cuts is the capital and other costs associated with the fractional distillation of crude oil. Heavier crude oil cuts (i.e. those boiling beyond ∼350°C) are relatively rich in substituted aromatic species and especially substituted condensed aromatic species (containing two or more aromatic rings which share edges) and under steam cracking conditions these materials would yield substantial quantities of heavy by products such as C9+ aromatics and condensed aromatics. Hence, a consequence of the conventional combination of crude oil distillation and steam cracking is that a substantial fraction of the crude oil is not processed via the steam cracker as the cracking yield of valuable products from heavier cuts is not considered to be sufficiently high.

Another aspect of the technology discussed above is that even when only light crude oil cuts (such as naphtha) are processed via steam cracking a significant fraction of the feed stream is converted into low value heavy by-products such as C9+ aromatics and condensed aromatics. With typical naphtha's and gas oils these heavy by-products might constitute 2 to 25% of the total product yield (Table VI, Page 295, Pyrolysis: Theory and Industrial Practice by Lyle F. Albright et al, Academic Press, 1983). Whilst this represents a significant financial downgrade of expensive naphtha into lower value material on the scale of a conventional steam cracker the yield of these heavy by-products does not typically justify the capital investment required to up-grade these materials (e.g. by hydrocracking) into streams that might produce significant quantities of higher value chemicals. This is partly because hydrocracking plants have high capital costs and, as with most petrochemicals processes, the capital cost of these units typically scales with throughput raised to the power of 0.6 or 0.7. Consequently, the capital costs of a small scale hydro-cracking unit are normally considered to be too high to justify such an investment to process steam cracker heavy by-products.

Another aspect of the conventional hydrocracking of heavy refinery streams such as residua is that these are typically carried out under compromise conditions chosen to achieve the desired overall conversion. As the feed streams contain a mixture of species with a range of ease of cracking this results in some fraction of the distillable products formed by hydrocracking of relatively easily hydrocracked species being further converted under the conditions necessary to hydrocrack species more difficult to hydrocrack. This increases the hydrogen consumption and heat management difficulties associated with the process and also increases the yield of light molecules such as methane at the expense of more valuable species.

A feature of such a combination of crude oil distillation and steam cracking of the lighter distillation cuts is that steam cracking furnace tubes are typically unsuitable for the processing of cuts which contain significant quantities of material with a boiling point greater than ∼350°C as it is difficult to ensure complete evaporation of these cuts prior to exposing the mixed hydrocarbon and steam stream to the high temperatures required to promote thermal cracking. If droplets of liquid hydrocarbon are present in the hot sections of cracking tubes coke is rapidly deposited on the tube surface which reduces heat transfer and increases pressure drop and ultimately curtails the operation of the cracking tube necessitating a shutdown of the furnace to allow for decoking. Due to this difficulty a significant proportion of the original crude oil cannot be processed into light olefins and aromatic species via a steam cracker.

US2009173665 relates to a catalyst and process for increasing the monoaromatics content of hydrocarbon feedstock's that include polynuclear aromatics, wherein the increase in monoaromatics can be achieved with an increase in gasoline/diesel yields and while reducing unwanted compounds thereby providing a route for upgrading hydrocarbons that include significant quantities of polynuclear aromatics.

FR 2 364 879 relates to a selective process for producing light olefinic hydrocarbons chiefly those with 2 and 3 carbon atoms respectively per molecule, particularly ethylene and propylene, which are obtained by hydrogenolysis or hydrocracking followed with steam-cracking.

GB1250615 relates to an aromatic extraction process whereby aromatics can be extracted from aromatic-containing hydro crackates, which method comprises introducing the aromatics-containing hydrocrackate feed into an aromatic extraction system as an upper feed, introducing as a middle feed a product derived by distillation from a light reformate and constituting benzene and heavier hydrocarbons and some toluene and introducing as a bottom feed a reformate fraction which constitutes toluene and heavier fractions and is free from cyclohexane, the solvent used in the aromatic extraction system having a boiling point lower than the aromatics-containing upper feed, and passing the aromatics-rich extract to an aromatic-solvent splitter.

US 3842138 relates to a method of thermal cracking in the presence of hydrogen of a charge of hydrocarbons of petroleum wherein the hydrocracking process is carried out under a pressure of 5 and 70 bars at the outlet of the reactor with very short residence times of 0,01 and 0,5 second and a temperature range at the outlet of the reactor extending from 625 to 1000 ° C.

EP 0584879 relates to a process for preparing lower olefins from a hydrocarbon feed having at least a fraction boiling above the boiling point range of the lower olefins, which process comprises thermal cracking of the hydrocarbon feed, wherein at least part of the hydrocarbon feed is a hydroprocessed synthetic oil fraction.

An object of the present invention is to provide a method for upgrading naphtha to aromatics and steam cracker feedstock.

Another object of the present invention is to provide a method for converting relatively heavy liquid feeds, such as diesel and atmospheric gasoil to produce a hydrocracking product stream comprising mono-aromatic hydrocarbons and C2-C4 paraffins.

Another object of the present invention is to process a heavy liquid feedstock while minimizing the production of heavy C9+ byproducts.

The present invention relates to a process for cracking a hydrocarbon feedstock in a steam cracker unit, comprising the steps of claim 1. On the basis of such a process one or more of the present objects are achieved.

According to such a method for preparing a feedstock that can be used as a feedstock for cracking light hydrocarbons in a gas steam cracker unit the aromatics get separated in the aromatics extraction unit where the paraffins and naphthenes are sent to the second hydrocracking unit. Here all paraffins are hydrocracked to LPG and naphthenes are converted to aromatics which are preferably sent back to the extraction unit. In the extraction unit benzene (B) and toluene/xylene (TX) cut are produced. The TX-cut can be further hydrodealkylated to produce more benzene and fuel gas. This fuel gas (methane) can be used in the steam cracker unit making more hydrogen available for the first and second hydrocracking units. The typical fuel gas produced in a steam cracker unit usually contains a lot of hydrogen often fueled to satisfy the energy demand of the steam cracker in absence of other uses. This therefore will improve the energy performance and hydrogen balance.

In a preferred embodiment the separation unit comprises a distillation unit and an extraction unit, wherein the top stream from the distillation unit is preferably sent to the inlet of said extraction unit. The bottom stream of the distillation unit, comprising a stream high in heavy aromatics, is preferably returned to the inlet of the first hydrocracking unit. From the extraction unit a stream high in paraffins and naphtenes is sent to the second hydrocracking unit, whereas the stream high in mono-aromatics can be further fractionated, if necessary. According to another embodiment one can send the top stream from the distillation unit directly to the second hydrocracking unit.

The high content aromatics stream from the second hydrocracking unit is preferably returned to said separation unit, preferably to the inlet of said extraction unit. Such a return of said high content aromatics stream will have a beneficial effect on the total aromatics production efficiency. This means that feed for the extraction unit may comprise two different streams, i.e. the top stream from the distillation unit and the high content aromatics stream from the second hydrocracking unit.

In an embodiment the heavy aromatics can be recycled to the first hydrocracking unit. In the present method only light gasses are sent to the steam cracker unit which means that in principal a conventional gas cracker can be used. This cracker only needs to be outfitted with a C4 section if the CC4 stream contains sufficient butadiene, isobutylene required to make MTBE and 1-butene. Otherwise a BD extraction unit followed by hydrogenation of the remaining CC4 and a recycle to the furnaces will comprise the whole of the C4 section.

The process according to the invention further comprises returning said stream high in heavy aromatics to the first hydrocracking unit. According to another embodiment it might be helpful to further recover mono-aromatics from said stream high in heavy aromatics before returning said stream high in heavy aromatics to the first hydrocracking unit.

According to a preferred embodiment the present method further comprises separating C2-C4 paraffins from said gaseous stream and then feeding said C2-C4 paraffins thus separated to the furnace section of a steam cracker unit. It is also preferred to separate C3-C4 paraffins from said gaseous stream first and to send this C3-C4 paraffins fraction to a dehydrogenation unit for obtaining hydrogen, C3-olefins and C4-olefins. It is also possible to further separate the C3-C4 paraffins fraction into individual streams, each stream predominantly comprising C3 paraffins, and C4 paraffins, respectively, and to feed each individual stream to a hydrogenation unit. The remaining C2 fraction is sent to the steam cracker unit. In a preferred embodiment it is possible to have a C3 plus C4 dehydrogenation or separate C3 dehydrogenation and C4 dehydrogenation (PDH/BDH). Processes for the dehydrogenation of lower alkanes such as propane and butanes are described as lower alkane dehydrogenation process.

The separation of C2-C4 paraffins from said gaseous stream is preferably carried out by cryogenic distillation or solvent extraction. For an optimum product yield in the steam cracker unit it is preferred to separate C2-C4 paraffins in individual streams, each stream predominantly comprising C2 paraffins, C3 paraffins and C4 paraffins, respectively, and to feed each individual stream to a specific furnace section of said steam cracker unit. In an embodiment of the present method a stream predominantly comprising hydrogen and methane is recovered from said gaseous stream and recycled to the first and/or second hydrocracking unit.

In the present process for cracking a hydrocarbon feedstock in a steam cracker unit, in which process at least two hydrocracking units are present, the temperature in the first hydrocracking unit is lower than the temperature in the second hydrocracking unit. The desired chemical composition of the products from the second hydrocracking unit is such that more severe paraffin hydrocracking and more severe naphthene dehydrogenation conditions are required. In addition, it is also preferred that the hydrogen partial pressure in the first hydrocracking unit is higher than the hydrogen partial pressure in the second hydrocracking unit.

The reactor type design of the first and second hydrocracking unit is chosen from the group of the fixed bed type, ebulating bed reactor type and the slurry type, wherein the fixed bed type is the preferred type for both the first and second hydrocracking unit.

The hydrocarbon feedstock to said first hydrocracking unit is of the type naphtha, kerosene, diesel, atmospheric gas oil (AGO), waxes, vacuum gas oil (VGO), atmospheric residue, vacuum residue and gas condensates, or combinations thereof, especially naphtha and diesel.

The present invention furthermore relates to the use of a first hydrocracking unit, a separation unit and a second hydrocracking unit placed in series, in which hydrocracking units the process conditions are different from each other, especially that the process conditions for the second hydrocracking unit are more severe with respect to paraffin hydrocracking and naphthene dehydrogenation than for the first one, for preparing a high content LPG stream as a feedstock for a steam cracker unit and/or a dehydrogenation unit.

The term "crude oil" as used herein refers to the petroleum extracted from geologic formations in its unrefined form. Any crude oil is suitable as the source material for the process of this invention, including Arabian Heavy, Arabian Light, other Gulf crudes, Brent, North Sea crudes, North and West African crudes, Indonesian, Chinese crudes and mixtures thereof, but also shale oil, tar sands and bio-based oils. The crude oil is preferably a conventional petroleum having an API gravity of more than 20° API as measured by the ASTM D287 standard. More preferably, the crude oil used is a light crude oil having an API gravity of more than 30° API. Most preferably, the crude oil comprises Arabian Light Crude Oil. Arabian Light Crude Oil typically has an API gravity of between 32-36° API and a sulfur content of between 1.5-4.5 wt-%.

The term "petrochemicals" or "petrochemical products" as used herein relates to chemical products derived from crude oil that are not used as fuels. Petrochemical products include olefins and aromatics that are used as a basic feedstock for producing chemicals and polymers. High-value petrochemicals include olefins and aromatics. Typical high-value olefins include, but are not limited to, ethylene, propylene, butadiene, butylene-1, isobutylene, isoprene, cyclopentadiene and styrene. Typical high-value aromatics include, but are not limited to, benzene, toluene, xylene and ethyl benzene.

The term "fuels" as used herein relates to crude oil-derived products used as energy carrier. Unlike petrochemicals, which are a collection of well-defined compounds, fuels typically are complex mixtures of different hydrocarbon compounds. Fuels commonly produced by oil refineries include, but are not limited to, gasoline, jet fuel, diesel fuel, heavy fuel oil and petroleum coke.

The term "aromatic hydrocarbons" or "aromatics" is very well known in the art. Accordingly, the term "aromatic hydrocarbon" relates to cyclically conjugated hydrocarbon with a stability (due to delocalization) that is significantly greater than that of a hypothetical localized structure (e.g. Kekulé structure). The most common method for determining aromaticity of a given hydrocarbon is the observation of diatropicity in the 1H NMR spectrum, for example the presence of chemical shifts in the range of from 7.2 to 7.3 ppm for benzene ring protons.

The terms "naphthenic hydrocarbons" or "naphthenes" or "cycloalkanes" is used herein having its established meaning and accordingly relates types of alkanes that have one or more rings of carbon atoms in the chemical structure of their molecules.

The term "olefin" is used herein having its well-established meaning. Accordingly, olefin relates to an unsaturated hydrocarbon compound containing at least one carbon-carbon double bond. Preferably, the term "olefins" relates to a mixture comprising two or more of ethylene, propylene, butadiene, butylene-1, isobutylene, isoprene and cyclopentadiene.

The term "LPG" as used herein refers to the well-established acronym for the term "liquefied petroleum gas". LPG generally consists of a blend of C2-C4 hydrocarbons i.e. a mixture of C2, C3, and C4 hydrocarbons.

The term "BTX" as used herein relates to a mixture of benzene, toluene and xylenes.

As used herein, the term "C# hydrocarbons", wherein "#" is a positive integer, is meant to describe all hydrocarbons having # carbon atoms. Moreover, the term "C#+ hydrocarbons" is meant to describe all hydrocarbon molecules having # or more carbon atoms. Accordingly, the term "C5+ hydrocarbons" is meant to describe a mixture of hydrocarbons having 5 or more carbon atoms. The term "C5+ alkanes" accordingly relates to alkanes having 5 or more carbon atoms. As used herein, the term "crude distillation unit" or "crude oil distillation unit" relates to the fractionating column that is used to separate crude oil into fractions by fractional distillation; see Alfke et al. (2007) loc.cit. Preferably, the crude oil is processed in an atmospheric distillation unit to separate gas oil and lighter fractions from higher boiling components (atmospheric residuum or "resid"). It is not required to pass the resid to a vacuum distillation unit for further fractionation of the resid, and it is possible to process the resid as a single fraction. In case of relatively heavy crude oil feeds, however, it may be advantageous to further fractionate the resid using a vacuum distillation unit to further separate the resid into a vacuum gas oil fraction and vacuum residue fraction. In case vacuum distillation is used, the vacuum gas oil fraction and vacuum residue fraction may be processed separately in the subsequent refinery units. For instance, the vacuum residue fraction may be specifically subjected to solvent deasphalting before further processing.

As used herein, the term "hydrocracker unit" or "hydrocracker" relates to a refinery unit in which a hydrocracking process is performed i.e. a catalytic cracking process assisted by the presence of an elevated partial pressure of hydrogen; see e.g. Alfke et al. (2007) loc.cit. The products of this process are saturated hydrocarbons and, depending on the reaction conditions such as temperature, pressure and space velocity and catalyst activity, aromatic hydrocarbons including BTX. The process conditions used for hydrocracking generally includes a process temperature of 200-600 °C, elevated pressures of 0.2-20 MPa, space velocities between 0.1-10 h-1

Hydrocracking reactions proceed through a bifunctional mechanism which requires a acid function, which provides for the cracking and isomerization and which provides breaking and/or rearrangement of the carbon-carbon bonds comprised in the hydrocarbon compounds comprised in the feed, and a hydrogenation function. Many catalysts used for the hydrocracking process are formed by composting various transition metals, or metal sulfides with the solid support such as alumina, silica, alumina-silica, magnesia and zeolites.

As used herein, the term "hydrocracking unit" or "FHC (Feed HydroCracking)" refers to a refinery unit for performing a hydrocracking process suitable for converting a complex hydrocarbon feed that is relatively rich in naphthenic and paraffinic hydrocarbon compounds -such as straight run cuts including, but not limited to, naphtha- to LPG and alkanes. Preferably, the hydrocarbon feed that is subject to feed hydrocracking comprises naphtha. Accordingly, the main product produced by feed hydrocracking is LPG that is to be converted into olefins (i.e. to be used as a feed for the conversion of alkanes to olefins). The FHC process may be optimized to keep one aromatic ring intact of the aromatics comprised in the FHC feedstream, but to remove most of the side-chains from said aromatic ring.. Alternatively, the FHC process can be optimized to open the aromatic ring of the aromatic hydrocarbons comprised in the FHC feedstream. This can be achieved by increasing the hydrogenation activity of the catalyst, optionally in combination with selecting a lower process temperature, optionally in combination with a reduced space velocity. In such a case, feed hydrocracking conditions for the second hydrocracking unit thus include a temperature of 300-550 °C, a pressure of 300-5000 kPa gauge and a Weight Hourly Space Velocity of 0.1-10 h-1. Preferred feed hydrocracking conditions include a temperature of 300-450 °C, a pressure of 300-5000 kPa gauge and a Weight Hourly Space Velocity of 0.1-10 h-1. Even more preferred FHC conditions optimized to the ring-opening of aromatic hydrocarbons include a temperature of 300-400 °C, a pressure of 600-3000 kPa gauge and a Weight Hourly Space Velocity of 0.2-2 h-1.

In the process of the invention the first hydrocracking unit can be seen as a ring opening hydrocracker unit. The "aromatic ring opening unit" refers to a refinery unit wherein the aromatic ring opening process is performed. Aromatic ring opening is a specific hydrocracking process that is particularly suitable for converting a feed that is relatively rich in aromatic hydrocarbons having a boiling point in the kerosene, and gasoil and vacuum gasoil boiling point range to produce LPG and, depending on the process conditions, a light-distillate (ARO-derived gasoline). Such aromatic ring opening processes (ARO process) are for instance described in US3256176 and US4789457. Such processes may comprise of either a single fixed bed catalytic reactor or two such reactors in series together with one or more fractionation units to separate desired products from unconverted material and may also incorporate the ability to recycle unconverted material to one or both of the reactors. Reactors may be operated at a temperature of 200-600 °C, preferably 300-400 °C, a pressure of 3-35 MPa, preferably 5 to 20 MPa together with 5-20 wt-% of hydrogen (in relation to the hydrocarbon feedstock), wherein said hydrogen may flow co-current with the hydrocarbon feedstock or counter current to the direction of flow of the hydrocarbon feedstock, in the presence of a dual functional catalyst active for both hydrogenation-dehydrogenation and ring cleavage, wherein said aromatic ring saturation and ring cleavage may be performed. Catalysts used in such processes comprise one or more elements selected from the group consisting of Pd, Rh, Ru, Ir, Os, Cu, Co, Ni, Pt, Fe, Zn, Ga, In, Mo, W and V in metallic or metal sulphide form supported on an acidic solid such as alumina, silica, alumina-silica and zeolites. In this respect, it is to be noted that the term "supported on" as used herein includes any conventional way to provide a catalyst which combines one or more elements with a catalytic support. By adapting either single or in combination the catalyst composition, operating temperature, operating space velocity and/or hydrogen partial pressure, the process can be steered towards full saturation and subsequent cleavage of all rings or towards keeping one aromatic ring unsaturated and subsequent cleavage of all but one ring. In the latter case, the ARO process produces a light-distillate ("ARO-gasoline") which is relatively rich in hydrocarbon compounds having one aromatic and or naphthenic ring. In the context of the present invention, it is preferred to use an aromatic ring opening process that is optimized to keep one aromatic or naphthenic ring intact and thus to produce a light-distillate which is relatively rich in hydrocarbon compounds having one aromatic or naphthenic ring.

The above discussion of the first and second hydrocracking unit illustrates that, especially regarding the nature of the feed streams and operating pressures, these two units are significantly different. As used herein, the term "dearomatization unit" relates to a refinery unit for the separation of aromatic hydrocarbons, such as BTX, from a mixed hydrocarbon feed. Such dearomatization processes are described in Folkins (2000) Benzene, Ullmann's Encyclopedia of Industrial Chemistry. Accordingly, processes exist to separate a mixed hydrocarbon stream into a first stream that is enriched for aromatics and a second stream that is enriched for paraffins and naphthenes. A preferred method to separate aromatic hydrocarbons from a mixture of aromatic and aliphatic hydrocarbons is solvent extraction; see e.g. WO 2012135111 A2. The preferred solvents used in aromatic solvent extraction are sulfolane, tetraethylene glycol and N-methylpyrolidone which are commonly used solvents in commercial aromatics extraction processes. These species are often used in combination with other solvents or other chemicals (sometimes called co-solvents) such as water and/or alcohols. Non-nitrogen containing solvents such as sulfolane are particularly preferred. Commercially applied dearomatization processes are less preferred for the dearomatization of hydrocarbon mixtures having a boiling point range that exceeds 250 °C, preferably 200 °C, as the boiling point of the solvent used in such solvent extraction needs to be lower than the boiling point of the aromatic compounds to be extracted. Solvent extraction of heavy aromatics is described in the art; see e.g. US 5,880,325. Alternatively, other known methods than solvent extraction, such as molecular sieve separation or separation based on boiling point, can be applied for the separation of heavy aromatics in a dearomatization process.

A process to separate a mixed hydrocarbon stream into a stream comprising predominantly paraffins and a second stream comprising predominantly aromatics and naphthenes comprises processing said mixed hydrocarbon stream in a solvent extraction unit comprising three main hydrocarbon processing columns: solvent extraction column, stripper column and extract column. Conventional solvents selective for the extraction of aromatics are also selective for dissolving light naphthenic and to a lesser extent light paraffinic species hence the stream exiting the base of the solvent extraction column comprises solvent together with dissolved aromatic, naphthenic and light paraffinic species. The stream exiting the top of the solvent extraction column (often termed the raffinate stream) comprises the relatively insoluble, with respect to the chosen solvent) paraffinic species. The stream exiting the base of the solvent extraction column is then subjected, in a distillation column, to evaporative stripping in which species are separated on the basis of their relative volatility in the presence of the solvent. In the presence of a solvent, light paraffinic species have higher relative volatilities than naphthenic species and especially aromatic species with the same number of carbon atoms, hence the majority of light paraffinic species may be concentrated in the overhead stream from the evaporative stripping column. This stream may be combined with the raffinate stream from the solvent extraction column or collected as a separate light hydrocarbon stream. Due to their relatively low volatility the majority of the naphthenic and especially aromatic species are retained in the combined solvent and dissolved hydrocarbon stream exiting the base of this column. In the final hydrocarbon processing column of the extraction unit, the solvent is separated from the dissolved hydrocarbon species by distillation. In this step the solvent, which has a relatively high boiling point, is recovered as the base stream from the column whilst the dissolved hydrocarbons, comprising mainly aromatics and naphthenic species, are recovered as the vapour stream exiting the top of the column. This latter stream is often termed the extract.

The process of the present invention may require removal of sulfur from certain crude oil fractions to prevent catalyst deactivation in downstream refinery processes, such as catalytic reforming or fluid catalytic cracking. Such a hydrodesulfurization process is performed in a "HDS unit" or "hydrotreater"; see Alfke (2007) loc. cit. Generally, the hydrodesulfurization reaction takes place in a fixed-bed reactor at elevated temperatures of 200-425 °C, preferably of 300-400 °C and elevated pressures of 1-20 MPa gauge, preferably 1-13 MPa gauge in the presence of a catalyst comprising elements selected from the group consisting of Ni, Mo, Co, W and Pt, with or without promoters, supported on alumina, wherein the catalyst is in a sulfide form.

In a further embodiment, the process further comprises a hydrodealkylation step wherein the BTX (or only the toluene and xylenes fraction of said BTX produced) is contacted with hydrogen under conditions suitable to produce a hydrodealkylation product stream comprising benzene and fuel gas.

The process step for producing benzene from BTX may include a step wherein the benzene comprised in the hydrocracking product stream is separated from the toluene and xylenes before hydrodealkylation. The advantage of this separation step is that the capacity of the hydrodealkylation reactor is increased. The benzene can be separated from the BTX stream by conventional distillation.

Processes for hydrodealkylation of hydrocarbon mixtures comprising C6-C9 aromatic hydrocarbons are well known in the art and include thermal hydrodealkylation and catalytic hydrodealkylation; see e.g. WO 2010/102712 A2. Catalytic hydrodealkylation is preferred as this hydrodealkylation process generally has a higher selectivity towards benzene than thermal hydrodealkylation. Preferably catalytic hydrodealkylation is employed, wherein the hydrodealkylation catalyst is selected from the group consisting of supported chromium oxide catalyst, supported molybdenum oxide catalyst, platinum on silica or alumina and platinum oxide on silica or alumina.

The process conditions useful for hydrodealkylation, also described herein as "hydrodealkylation conditions", can be easily determined by the person skilled in the art. The process conditions used for thermal hydrodealkylation are for instance described in DE 1668719 A1 and include a temperature of 600-800 °C, a pressure of 3-10 MPa gauge and a reaction time of 15-45 seconds. The process conditions used for the preferred catalytic hydrodealkylation are described in WO 2010/102712 A2 and preferably include a temperature of 500-650 °C, a pressure of 3.5-8 MPa gauge, preferably of 3.5-7 MPa gauge and a Weight Hourly Space Velocity of 0.5-2 h-1. The hydrodealkylation product stream is typically separated into a liquid stream (containing benzene and other aromatics species) and a gas stream (containing hydrogen, H2S, methane and other low boiling point hydrocarbons) by a combination of cooling and distillation. The liquid stream may be further separated, by distillation, into a benzene stream, a C7 to C9 aromatics stream and optionally a middle-distillate stream that is relatively rich in aromatics. The C7 to C9 aromatic stream may be fed back to reactor section as a recycle to increase overall conversion and benzene yield. The aromatic stream which contains polyaromatic species such as biphenyl, is preferably not recycled to the reactor but may be exported as a separate product stream and recycled to the integrated process as middle-distillate ("middle-distillate produced by hydrodealkylation"). The gas stream contains significant quantities of hydrogen may be recycled back the hydrodealkylation unit via a recycle gas compressor or to any other refinery that uses hydrogen as a feed. A recycle gas purge may be used to control the concentrations of methane and H2S in the reactor feed.

As used herein, the term "gas separation unit" relates to the refinery unit that separates different compounds comprised in the gases produced by the crude distillation unit and/or refinery unit-derived gases. Compounds that may be separated to separate streams in the gas separation unit comprise ethane, propane, butanes, hydrogen and fuel gas mainly comprising methane. Any conventional method suitable for the separation of said gases may be employed. Accordingly, the gases may be subjected to multiple compression stages wherein acid gases such as CO2 and H2S may be removed between compression stages. In a following step, the gases produced may be partially condensed over stages of a cascade refrigeration system to about where only the hydrogen remains in the gaseous phase. The different hydrocarbon compounds may subsequently be separated by distillation.

A process for the conversion of alkanes to olefins involves "steam cracking" or "pyrolysis". As used herein, the term "steam cracking" relates to a petrochemical process in which saturated hydrocarbons are broken down into smaller, often unsaturated, hydrocarbons such as ethylene and propylene. In steam cracking gaseous hydrocarbon feeds like ethane, propane and butanes, or mixtures thereof, (gas cracking) or liquid hydrocarbon feeds like naphtha or gasoil (liquid cracking) is diluted with steam and briefly heated in a furnace without the presence of oxygen. Typically, the reaction temperature is 750-900 °C, but the reaction is only allowed to take place very briefly, usually with residence times of 50-1000 milliseconds. Preferably, a relatively low process pressure is to be selected of atmospheric up to 175 kPa gauge. Preferably, the hydrocarbon compounds ethane, propane and butanes are separately cracked in accordingly specialized furnaces to ensure cracking at optimal conditions. After the cracking temperature has been reached, the gas is quickly quenched to stop the reaction in a transfer line heat exchanger or inside a quenching header using quench oil. Steam cracking results in the slow deposition of coke, a form of carbon, on the reactor walls. Decoking requires the furnace to be isolated from the process and then a flow of steam or a steam/air mixture is passed through the furnace coils. This converts the hard solid carbon layer to carbon monoxide and carbon dioxide. Once this reaction is complete, the furnace is returned to service. The products produced by steam cracking depend on the composition of the feed, the hydrocarbon to steam ratio and on the cracking temperature and furnace residence time. Light hydrocarbon feeds such as ethane, propane, butane or light naphtha give product streams rich in the lighter polymer grade olefins, including ethylene, propylene, and butadiene. Heavier hydrocarbon (full range and heavy naphtha and gas oil fractions) also give products rich in aromatic hydrocarbons.

To separate the different hydrocarbon compounds produced by steam cracking the cracked gas is subjected to a fractionation unit. Such fractionation units are well known in the art and may comprise a so-called gasoline fractionator where the heavy-distillate ("carbon black oil") and the middle-distillate ("cracked distillate") are separated from the light-distillate and the gases. In the subsequent optional quench tower, most of the light-distillate produced by steam cracking ("pyrolysis gasoline" or "pygas") may be separated from the gases by condensing the light-distillate. Subsequently, the gases may be subjected to multiple compression stages wherein the remainder of the light distillate may be separated from the gases between the compression stages. Also acid gases (CO2 and H2S) may be removed between compression stages. In a following step, the gases produced by pyrolysis may be partially condensed over stages of a cascade refrigeration system to about where only the hydrogen remains in the gaseous phase. The different hydrocarbon compounds may subsequently be separated by simple distillation, wherein the ethylene, propylene and C4 olefins are the most important high-value chemicals produced by steam cracking. The methane produced by steam cracking is generally used as fuel gas, the hydrogen may be separated and recycled to processes that consume hydrogen, such as hydrocracking processes. The acetylene produced by steam cracking preferably is selectively hydrogenated to ethylene. The alkanes comprised in the cracked gas may be recycled to the process for olefins synthesis.

The term "propane dehydrogenation unit" as used herein relates to a petrochemical process unit wherein a propane feedstream is converted into a product comprising propylene and hydrogen. Accordingly, the term "butane dehydrogenation unit" relates to a process unit for converting a butane feedstream into C4 olefins. Together, processes for the dehydrogenation of lower alkanes such as propane and butanes are described as lower alkane dehydrogenation process. Processes for the dehydrogenation of lower alkanes are well-known in the art and include oxidative dehydrogenation processes and non-oxidative dehydrogenation processes. In an oxidative dehydrogenation process, the process heat is provided by partial oxidation of the lower alkane(s) in the feed. In a non-oxidative dehydrogenation process, which is preferred in the context of the present invention, the process heat for the endothermic dehydrogenation reaction is provided by external heat sources such as hot flue gases obtained by burning of fuel gas or steam. In a non-oxidative dehydrogenation process the process conditions generally comprise a temperature of 540-700 °C and an absolute pressure of 25-500 kPa. For instance, the UOP Oleflex process allows for the dehydrogenation of propane to form propylene and of (iso)butane to form (iso)butylene (or mixtures thereof) in the presence of a catalyst containing platinum supported on alumina in a moving bed reactor; see e.g. US 4,827,072. The Uhde STAR process allows for the dehydrogenation of propane to form propylene or of butane to form butylene in the presence of a promoted platinum catalyst supported on a zinc-alumina spinel; see e.g. US 4,926,005. The STAR process has been recently improved by applying the principle of oxydehydrogenation. In a secondary adiabatic zone in the reactor part of the hydrogen from the intermediate product is selectively converted with added oxygen to form water. This shifts the thermodynamic equilibrium to higher conversion and achieves a higher yield. Also the external heat required for the endothermic dehydrogenation reaction is partly supplied by the exothermic hydrogen conversion. The Lummus Catofin process employs a number of fixed bed reactors operating on a cyclical basis. The catalyst is activated alumina impregnated with 18-20 wt-% chromium; see e.g. EP 0 192 059 A1 and GB 2 162 082 A. The Catofin process has the advantage that it is robust and capable of handling impurities which would poison a platinum catalyst. The products produced by a butane dehydrogenation process depends on the nature of the butane feed and the butane dehydrogenation process used. Also the Catofin process allows for the dehydrogenation of butane to form butylene; see e.g. US 7,622,623.

The present invention will be discussed in the next Example which example should not be interpreted as limiting the scope of protection.

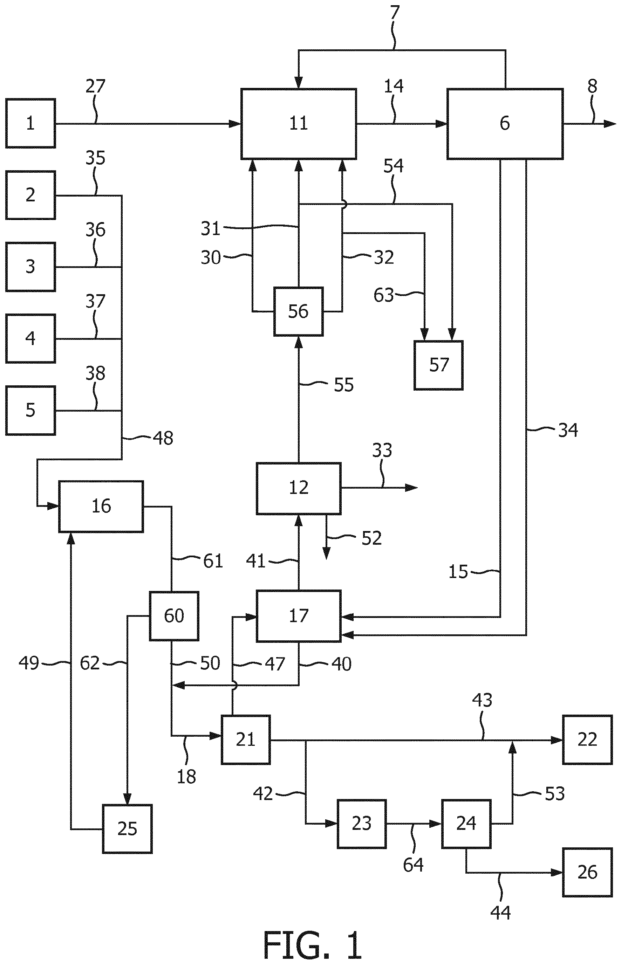

The sole Figure provides a schematic flow sheet of an embodiment of the present invention.

### Example

The process scheme can be found in the sole Figure. Feedstock 48, which can include different types of feedstock, for example naphtha 35, kerosene 36, diesel 37, atmospheric gas oil (AGO) 38 originating from tanks 2,3,4,5 respectively, is sent to a first hydrocracker unit 16. In hydrocracking unit 16 a feedstock 48 is hydrocracked in the presence of hydrogen. The hydrocracking process results in the formation of a stream 61 of reaction products, which stream 61 is sent to a distillation unit 60, resulting in a top stream 50 of light components, i.e. a stream high in paraffins and naphtenes, and a bottom stream 62 of more heavy components, i.e. a stream high in heavy aromatics. Top stream 50 can also be indicated as a stream comprising light paraffins and naphtenes. Stream 50 is further treated in an extraction or dearomatization unit 21, and in extraction unit 21 a stream 47 high in paraffins and naphtenes and a stream 43 high in mono-aromatics is obtained. The stream 47 high in paraffins and naphtenes is sent to a second hydrocracking unit 17, wherein the process conditions in the first hydrocracking unit 16 differ from the process conditions in the second hydrocracking unit 17. The operating pressure for the first hydrocracker unit 16 is preferably in the range 3-35 MPa, more preferably 5 to 20MPa, whereas the operating pressure range for the second hydrocracker unit 17, is preferably in the range of 300-5000 kPa. Gaseous stream 41 coming from second hydrocracking unit 17 and comprising C2-C4 paraffins, hydrogen and methane is sent to a separator 12, e.g. cryogenic distillation or solvent extraction, and separated into different streams, i.e. a stream 55 comprising C2-C4 paraffins, a stream 52 comprising hydrogen and methane and a purge stream 33. Stream 52 can be recycled to hydrocracking unit 17 or hydrocracking unit 16, possibly after separation/purification integrated with/in steam cracker separation section 6. Stream 62 high in heavy aromatics is returned to the first hydrocracking unit 16, but it is preferred to recover a stream high in mono-aromatics (not shown) from stream 62 before returning said stream 62 to the first hydrocracking unit 16.

The present inventors found that it is preferred to separate stream 61 and send the heavier material 62 back to unit 16 to produce a stream 50 which is low in di-ring and tri-ring aromatic material. The benefit of this action is to operate the two hydrocracking units 16, 17 under differently optimized conditions, i.e. for the first hydrocracker unit 16 conditions suited open aromatic rings (i.e. trickle bed operation at high pressure and moderate temperature) and for the second hydrocracker unit 17 conditions optimized for the production of ethane, propane and butane plus some BTX aromatics (i.e. vapor phase operation at relatively low operating pressure and high temperature).

Stream 55 can be sent directly (not shown) to a steam cracker unit 11. However, before sending stream 55 to steam cracker unit 11 it is preferred to carry out a separation on stream 55 first. In separator 56 the C2-C4 paraffins are separated into individual streams 30, 31 and 32. This means that stream 30 predominantly comprises C2, stream 31 predominantly comprises C3 and stream 32 predominantly comprises C4. If necessary, further separation of unwanted components or temperature adjustments can made. The individual streams 30, 31 and 32 will be sent to specific furnace sections of steam cracker unit 11. In a preferred embodiment stream 31 will be divided in a stream 54 and stream 32 in a stream 63, respectively. Stream 54 predominantly comprising C3 and stream 63 predominantly comprising C4 will be sent to dehydrogenation unit 57. This means that only stream 30 which predominantly comprises C2 will be sent to steam cracker unit 11.

Although steam cracker unit 11 is shown as one single unit, in the present method is to be understood that in a preferred embodiment steam cracker unit 11 comprises different furnace sections each dedicated for a specific chemical composition, that is a furnace section for C2, a furnace section for C3 and a furnace section for C4.

In steam cracker unit 11 streams 30, 31 and 32 and a feedstock 27, for example gases coming from a unit 1 are processed and its reaction products 14 are separated in a separation section 6. A gas stream 7 containing C2-6 alkanes is recycled to the steam cracker unit 11. Hydrogen 15 and pygas 34 can be sent to second hydrocracking unit 17, or even to first hydrocracking unit 16. This latter embodiment has not been shown. According to a preferred embodiment (not shown) pygas 34 is sent to the inlet of extraction unit 21.

The valuable product stream 8 like unsaturated hydrocarbons such as lighter alkenes including ethylene, propylene and butadienes is sent to further petrochemical processes. In case heavy hydrocarbons such as carbon black oil (CBO), cracked distillates (CD) and C9+ hydrocarbons are produced in steam cracker unit 11 these products can be recovered in separator 6 and optionally be recycled to hydrocracking unit 16 (not shown) and/or hydrocracking unit 17 as well. However, it is preferred to recycle these types of material (CBO and CD) to the first hydrocracking unit 16 because these materials are more suitable for the first hydrocracker unit than the second hydrocracker unit.

The process further comprises returning the high content aromatics stream 40 to the extraction unit 21. This means that feedstock 18 can be seen as a combination of stream 50 coming as a top stream from distillation unit 60 and a stream 40 coming from hydrocracking unit 17. High content mono aromatics stream 43 can be separated into a stream 42 for further processing in unit 23 and converted in unit 24 into a benzene rich fraction 53 and a methane rich fraction 44.

The Example disclosed herein makes a distinction between several situations, i.e. a process (case 1) in which diesel as a feedstock is first processed through liquid hydrocracking unit and its reaction products are processed through a steam cracker unit and a process (case 2) in which the feedstock for the hydrocracking unit is pretreated in a sequence of another hydrocracking (first unit) unit and an extraction unit, wherein the aromatics fraction obtained is directly sent to the steam cracker separation section, and the remainder fraction of the extraction unit is used as a feedstock for the second hydrocracking unit. Case 1 is a comparative example and case 2 is an example according to the present invention.

In table the results of case 1 and case 2 are shown.

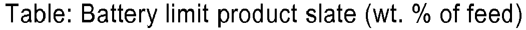

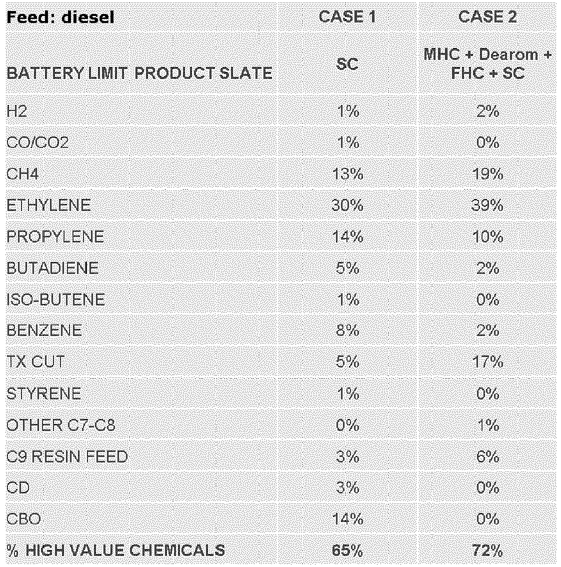

Comparative case 1 shows high yields of heavy products (C9 Resin Feed, CD and CBO). In contrast case 2, which illustrates processing diesel according to the present invention, shows a much lower yield of heavy products, with essentially no CD and CBO production. For case 1 one can see in the product slate more ethylene but less propylene and heavier products. The BTX production is kept high because due to the existing mono-aromatics in the feed and an upgrade of a part of the heavy material (reduction of C9 resin feed, CD & CBO production).

An aspect of the present method is that methane production is increased because of a shift from liquid steam cracking to gas steam cracking. When applying PDH/BDH there will actually be a decrease in methane production due to the higher efficiency of the dehydrogenation in this respect. In overall terms, the amount of high value chemicals (components starting from ethylene and ending with "other C7-C8" as defined in Table 1), increases incrementally from 65 to 72 % from case 1 to case 2.

The present inventors further found that when using a hydrocracking unit the benzene-toluene-xylene ratios are changed from a benzene-rich stream (steam cracker without any hydrocracking unit, case 1) to a toluene-rich stream (steam cracker with hydrocracking unit, case 2).

## Claims

1. A process for cracking a hydrocarbon feedstock in a steam cracker unit, comprising the following steps of:
feeding a hydrocarbon feedstock to a first hydrocracking unit, wherein said first hydrocracking unit is operated as a ring opening hydrocracker unit at a temperature of 200-600 °C and a pressure of 3-35 MPa,
feeding the hydrocarbon feedstock thus cracked to a separation unit for obtaining a stream high in paraffins and naphtenes, a stream high in heavy aromatics and a stream high in mono-aromatics
feeding the stream high in paraffins and naphtenes to a second hydrocracking unit, wherein said second hydrocracking unit is operated at a temperature of 300-550 °C, a pressure of 300-5000 kPa gauge and a Weight Hourly Space Velocity of 0.1-10 h-1, the temperature in the first hydrocracking unit being lower than the temperature in the second hydrocracking unit,
separating the stream thus hydrocracked in the second hydrocracking unit in a high content aromatics stream and gaseous stream comprising C2-C4 paraffins, hydrogen and methane,
feeding the gaseous stream to a steam cracker unit and cracking said gaseous stream in said steam cracker unit.

2. The process according to claim 1, further comprising returning said stream high in heavy aromatics to the first hydrocracking unit.

3. The process according to claim 1, further comprising separating C2-C4 paraffins from said gaseous stream, and
feeding said C2-C4 paraffins thus separated to the furnace section of a steam cracker unit.

4. The process according to any one or more 1-3, wherein separating said C2-C4 paraffins from said gaseous stream is carried out by cryogenic distillation or solvent extraction.

5. The process according to claims 1-4, further comprising recovering mono-aromatics from said stream high in heavy aromatics before returning said stream high in heavy aromatics to the first hydrocracking unit.

6. The process according to claims 1-5, wherein the separation unit comprises a distillation unit and an extraction unit, wherein the top stream from the distillation unit is sent to the inlet of said extraction unit.

7. The process according to claims 1-6, further comprising returning said high content aromatics stream to said separation unit, preferably to the inlet of said extraction unit.

8. The process according to any one or more of the claims 1 - 7 wherein the hydrogen partial pressure in the first hydrocracking unit is higher than the hydrogen partial pressure in the second hydrocracking unit.

9. The process according to any one or more of the preceding claims, wherein the reactor type design of the first and second hydrocracking unit is chosen from the group of the fixed bed type, ebulating bed reactor type and the slurry type, especially the reactor type design of both the first and second hydrocracking unit is of the fixed bed type.

10. The process according to any one or more of the preceding claims, wherein the hydrocarbon feedstock to said first hydrocracking unit is of the type naphtha, kerosene, diesel, atmospheric gas oil (AGO), waxes, vacuum gas oil (VGO), atmospheric residue, vacuum residue and gas condensates, or combinations thereof, especially naphtha and diesel.

11. The process according to any one or more of the preceding claims, wherein said first hydrocracking unit is operated at a temperature of 300-400 °C, a pressure of 5 to 20 MPa.

12. The process according to any one or more of the preceding claims, wherein said second hydrocracking unit is operated at a temperature of 300-450 °C, a pressure of 300-5000 kPa gauge and a Weight Hourly Space Velocity of 0.1-10 h-1, preferably a temperature of 300-400 °C, a pressure of 600-3000 kPa gauge and a Weight Hourly Space Velocity of 0.2-2 h-1.

## Patentansprüche

1. Verfahren zum Cracken eines Kohlenwasserstoff-Einsatzmaterials in einer Dampfcrackeinheit, umfassend die folgenden Schritte:
Einführen eines Kohlenwasserstoff-Einsatzmaterials in eine erste Hydrocrackeinheit, wobei die erste Hydrocrackeinheit als Ringöffnungs-Hydrocrackeinheit bei einer Temperatur von 200 bis 600 °C und einem Druck von 3 bis 35 MPa betrieben wird,
Einführen des auf diese Weise gecrackten Kohlenwasserstoff-Einsatzmaterials in eine Trenneinheit, um einen Strom mit hohem Gehalt an Paraffinen und Naphthenen, einen Strom mit hohem Gehalt an schweren Aromaten und einen Strom mit hohem Gehalt an Monoaromaten zu erhalten,
Einführen des Stroms mit hohem Gehalt an Paraffinen und Naphthenen in eine zweite Hydrocrackeinheit, wobei die zweite Hydrocrackeinheit bei einer Temperatur von 300 bis 550 °C, einem Druck von 300 bis 5000 kPa Überdruck und einer gewichtsbezogenen stündlichen Raumgeschwindigkeit von 0,1 bis 10 h-1 betrieben wird, wobei die Temperatur in der ersten Hydrocrackeinheit niedriger ist als die Temperatur in der zweiten Hydrocrackeinheit,
Trennen des auf diese Weise in der zweiten Hydrocrackeinheit hydrogecrackten Stroms in einen Strom mit hohem Aromatengehalt und einen Gasstrom, der C2-C4-Paraffine, Wasserstoff und Methan umfasst,
Einführen des Gasstroms in eine Dampfcrackeinheit und Cracken des Gasstroms in der Dampfcrackeinheit.

2. Verfahren nach Anspruch 1, ferner umfassend das Rückführen des Stroms mit hohem Gehalt an schweren Aromaten zu der ersten Hydrocrackeinheit.

3. Verfahren nach Anspruch 1, ferner umfassend das Trennen von C2-C4-Paraffinen von dem Gasstrom, und
Einführen der auf diese Weise getrennten C2-C4-Paraffine in den Ofenabschnitt einer Dampfcrackeinheit.

4. Verfahren nach einem oder mehreren der Ansprüche 1 bis 3, wobei das Trennen der C2-C4-Paraffine von dem Gasstrom durch Tieftemperaturdestillation oder Lösemittelextraktion durchgeführt wird.

5. Verfahren nach den Ansprüchen 1 bis 4, ferner umfassend das Rückgewinnen von Monoaromaten aus dem Strom mit hohem Gehalt an schweren Aromaten, bevor der Strom mit hohem Gehalt an schweren Aromaten zu der ersten Hydrocrackeinheit zurückgeführt wird.

6. Verfahren nach den Ansprüchen 1 bis 5, wobei die Trenneinheit eine Destillationseinheit und eine Extraktionseinheit umfasst, wobei der Kopfstrom aus der Destillationseinheit zum Einlass der Extraktionseinheit gesendet wird.

7. Verfahren nach den Ansprüchen 1 bis 6, ferner umfassend das Rückführen des Stroms mit hohem Aromatengehalt zu der Trenneinheit, vorzugsweise zum Einlass der Extraktionseinheit.

8. Verfahren nach einem oder mehreren der Ansprüche 1 bis 7, wobei der Wasserstoffpartialdruck in der ersten Hydrocrackeinheit höher ist als der Wasserstoffpartialdruck in der zweiten Hydrocrackeinheit.

9. Verfahren nach einem oder mehreren der vorhergehenden Ansprüche, wobei der Reaktortypaufbau der ersten und zweiten Hydrocrackeinheit aus der Gruppe aus dem Festbetttyp, dem Wallendbettreaktortyp und dem Schlammtyp gewählt wird, wobei insbesondere der Reaktortypaufbau sowohl der ersten als auch der zweiten Hydrocrackeinheit vom Festbetttyp ist.

10. Verfahren nach einem oder mehreren der vorhergehenden Ansprüche, wobei das Kohlenwasserstoff-Einsatzmaterial der ersten Hydrocrackeinheit vom Typ Naphtha, Kerosin, Diesel, atmosphärisches Gasöl (AGO), Wachse, Vakuumgasöl (VGO), atmosphärischer Rückstand, Vakuumrückstand und Gaskondensate oder Kombinationen davon ist, insbesondere Naphtha und Diesel.

11. Verfahren nach einem oder mehreren der vorhergehenden Ansprüche, wobei die erste Hydrocrackeinheit bei einer Temperatur von 300 bis 400 °C und einem Druck von 5 bis 20 MPa betrieben wird.

12. Verfahren nach einem oder mehreren der vorhergehenden Ansprüche, wobei die zweite Hydrocrackeinheit bei einer Temperatur von 300 bis 450 °C, einem Druck von 300 bis 5000 kPa Überdruck und einer gewichtsbezogenen stündlichen Raumgeschwindigkeit von 0,1 bis 10 h-1 betrieben wird, vorzugsweise bei einer Temperatur von 300 bis 400 °C, einem Druck von 600 bis 3000 kPa Überdruck und einer gewichtsbezogenen stündlichen Raumgeschwindigkeit von 0,2 bis 2 h-1.

## Revendications

1. Procédé de craquage d'une matière première hydrocarbure dans une unité de vapocraquage, comprenant les étapes suivantes de :
l'alimentation d'une matière première hydrocarbure dans une première unité d'hydrocraquage, ladite première unité d'hydrocraquage étant actionnée sous la forme d'une unité d'hydrocraquage par ouverture de cycle à une température de 200 à 600 °C et une pression de 3 à 35 MPa,
l'alimentation de la matière première hydrocarbure ainsi craquée dans une unité de séparation pour obtenir un flux riche en paraffines et en naphtènes, un flux riche en aromatiques lourds et un flux riche en monoaromatiques alimentation du flux riche en paraffines et en naphtènes dans une deuxième unité d'hydrocraquage, ladite deuxième unité d'hydrocraquage étant actionnée à une température de 300 à 550 °C, une pression manométrique de 300 à 5000 kPa et une vitesse spatiale horaire en poids de 0,1 à 10 h⁻¹, la température dans la première unité d'hydrocraquage étant inférieure à la température dans la deuxième unité d'hydrocraquage,
la séparation du flux hydrocraqué ainsi dans la deuxième unité d'hydrocraquage en un flux à teneur élevée en aromatiques et un flux gazeux comprenant des paraffines en C2-C4, de l'hydrogène et du méthane,
l'alimentation du flux gazeux dans une unité de vapocraquage et le craquage dudit flux gazeux dans ladite unité de vapocraquage.

2. Procédé selon la revendication 1, comprenant en outre le retour dudit flux riche en aromatiques lourds vers la première unité d'hydrocraquage.

3. Procédé selon la revendication 1, comprenant en outre la séparation des paraffines en C2-C4 à partir dudit flux gazeux, et
l'alimentation desdites paraffines en C2-C4 séparées ainsi dans la section de four d'une unité de vapocraquage.

4. Procédé selon l'un ou plusieurs quelconques des revendications 1 à 3, dans lequel la séparation desdites paraffines en C2-C4 provenant dudit flux gazeux est conduite par distillation cryogénique ou extraction par solvant.

5. Procédé selon les revendications 1 à 4, comprenant en outre la récupération des monoaromatiques à partir dudit flux riche en aromatiques lourds avant le retour dudit flux riche en aromatiques lourds vers la première unité d'hydrocraquage.

6. Procédé selon les revendications 1 à 5, dans lequel l'unité de séparation comprend une unité de distillation et une unité d'extraction,
dans lequel le flux supérieur provenant de l'unité de distillation est envoyé à l'entrée de ladite unité d'extraction.

7. Procédé selon les revendications 1 à 6, comprenant en outre le retour dudit flux à teneur élevée en aromatiques vers ladite unité de séparation, de préférence vers l'entrée de ladite unité d'extraction.

8. Procédé selon l'une ou plusieurs quelconques des revendications 1 à 7, dans lequel la pression partielle d'hydrogène dans la première unité d'hydrocraquage est supérieure à la pression partielle d'hydrogène dans la deuxième unité d'hydrocraquage.

9. Procédé selon l'une ou plusieurs quelconques des revendications précédentes, dans lequel la conception de type de réacteur des première et deuxième unités d'hydrocraquage est choisie dans le groupe constitué d'un type de lit fixe, d'un type de réacteur à lit bouillonnant et d'un type en suspension concentrée, en particulier la conception de type de réacteur des première et deuxième unités d'hydrocraquage est du type à lit fixe.

10. Procédé selon l'une ou plusieurs quelconques des revendications précédentes, dans lequel la matière première hydrocarbure alimentée dans la première unité d'hydrocraquage est de type naphte, kérosène, diesel, gazole atmosphérique (AGO), cires, gazole sous vide (VGO), résidu atmosphérique, résidu sous vide et condensats de gaz, ou des combinaisons de ceux-ci, en particulier le naphte et le diesel.

11. Procédé selon l'une ou plusieurs quelconques des revendications précédentes, dans lequel ladite première unité d'hydrocraquage est actionnée à une température de 300 à 400 °C et une pression de 5 à 20 MPa.

12. Procédé selon l'une ou plusieurs quelconques des revendications précédentes, dans lequel ladite deuxième unité d'hydrocraquage est actionnée à une température de 300 à 450 °C, une pression manométrique de 300 à 5000 kPa et une vitesse spatiale horaire en poids de 0,1 à 10 h⁻¹, de préférence une température de 300 à 400 °C, une pression manométrique de 600 à 3000 kPa et une vitesse spatiale horaire en poids de 0,2 à 2 h⁻¹.
